# EUROPÄISCHE PATENTSCHRIFT

(11) **EP 4 283 274 B1**
(45) Veröffentlichungstag und Bekanntmachung des Hinweises auf die Patenterteilung: **29.04.2026**
(21) Anmeldenummer: 23020237.6
(22) Anmeldetag: 22.05.2023
(51) Int. Cl.: G01M 3/24, E03B 7/00, F17D 5/06

(54) **VERFAHREN ZUR FESTSTELLUNG UND/ODER ANALYSE EINES LECKS AN EINER LEITUNG FÜR FLÜSSIGE MEDIEN, INSBESONDERE EINER WASSERLEITUNG**
METHOD FOR DETECTING AND/OR ANALYZING A LEAK IN A PIPE FOR LIQUID MEDIA, IN PARTICULAR A WATER PIPE
PROCÉDÉ DE DÉTECTION ET/OU D'ANALYSE D'UNE FUITE DANS UNE CONDUITE DE MILIEU LIQUIDE, NOTAMMENT UNE CONDUITE D'EAU

(30) Priorität: 25.05.2022 DE 102022113311
(43) Veröffentlichungstag der Anmeldung: 29.11.2023
(73) Patentinhaber: Megger Germany GmbH, 96148 Baunach (DE)
(72) Erfinder: Hofmann, Michael, Breitengüßbach (DE)
(74) Vertreter: Meissner Bolte Nürnberg

(56) Entgegenhaltungen:
- EP-B1- 2 097 728
- JP-A- H10 281 921

## Beschreibung

Die Erfindung betrifft ein Verfahren zur Feststellung und/oder Analyse eines Lecks an einer Leitung für fluide Medien, insbesondere einer Wasserleitung, besonders bevorzugt einer Trinkwasserleitung, beispielsweise einer unterirdischen Trinkwasserleitung.

Typischerweise werden zur Ortung von Leckstellen in einem Rohrnetz Geräusch und/oder Frequenzlogger eingesetzt. Diese Geräusch- und/oder Frequenzlogger können an vielen Messstellen eingesetzt werden und erfassen Leckgeräusche, indem sie in vorgesehenen Messintervallen die durch Leckagen erzeugten Geräusche ermitteln und dieses Signal verarbeiten. Typischerweise werden solche Geräusch- und/oder Frequenzlogger direkt an den Leitungen für flüssige Medien, insbesondere den Wasserleitungen, besonders bevorzugt den Trinkwasserleitungen, oder an Armaturen der Leitungen, wie Streckenschiebern, Hausanschlussschiebern oder Unter - oder Oberflurhydranten, angebracht.

Durch ein Leck in einer Leitung tritt eine Druckschwankung an der Leckstelle auf. Diese Druckschwankung erzeugt eine Vibration an der Leckstelle, die sich über die Leitung ausbreitet und mit sensiblen Sensoren, wie Mikrofonen oder Piezosensoren, aufgezeichnet werden kann. Durch die Analyse der Geräuschdaten kann auf ein Leck in der Leitung geschlossen werden. Eine Leitung ohne Leck verursacht keine hörbaren Druckschwankungen. Die Geräuschsensoren werden in der Regel auf einer Schieberstange, die mit der Leitung mechanisch verbunden ist, aufgesetzt. Oftmals werden nicht nur die reinen Geräusche, die von einem Leck erzeugt werden, aufgezeichnet, sondern auch verschiedene Störgeräusche. Diese Störgeräusche werden durch Pumpen oder Brummen von elektrischen Geräten, beispielsweise Trafostationen, Umspannwerken, Klimaanlagen, etc. verursacht. Das vom Sensor aufgenommene Audiosignal besteht daher meist aus einer Mischung von Leckgeräusch und Störgeräusch. Dokument EP2097728B1 (CYBERNETIX [FR]) 9. November 2016 (2016-11-09) beschreibt ein System zur Erkennung und Lokalisierung von Ereignissen (mechanischer Aufprall, Leck oder Druck-Transient) in einem Fluid-Transport-Kanal.

Die Aufgabe der Erfindung ist es daher, ein neues Verfahren zur Feststellung und/oder Analyse eines Lecks an einer Leitung für fluide Medien, insbesondere einer Wasserleitung, anzugeben, insbesondere ein Verfahren, mit dem Störgeräusche zumindest weitestgehend von Leckgeräuschen unterschieden werden können.

Diese Aufgabe wird gelöst durch ein Verfahren zur Feststellung und/oder Analyse eines Lecks an einer (Rohr-)Leitung für fluide Medien, insbesondere einer Wasserleitung, gemäß den Merkmalen des Anspruchs 1. Vorteilhafte Ausgestaltungen und Weiterbildungen sind in den abhängigen Ansprüchen angegeben.

Das erfindungsgemäße Verfahren umfasst die folgenden Schritte:
a) Bereitstellen wenigstens eines Geräusch- und/oder Frequenzloggers, umfassend einen Sensor und eine Recheneinheit,
b) Anbringen des Geräusch- und/oder Frequenzloggers an der Leitung oder an Armaturen der Leitung,
c) Messen eines Geräuschs an der Leitung durch den Sensor und Ermitteln eines Geräuschpegels mittels der Recheneinheit,
   c1) wobei mittels der Recheneinheit eine Frequenzanalyse, insbesondere eine Fourier-Analyse, bevorzugt eine Fast-Fourier-Transformation, des Geräuschpegels zur Ermittlung eines Frequenzspektrums durchgeführt wird,
   c2) wobei das ermittelte Frequenzspektrum mittels der Recheneinheit in zwei oder mehrere Frequenzbänder unterteilt wird,
   c3) wobei mittels der Recheneinheit, insbesondere individuell, für jedes Frequenzband ein Schwellwert festlegt wird und/oder in der Recheneinheit hinterlegt ist, der größer ist als der maximale Geräuschpegel in diesem Frequenzband bei einer Messung an der leckfreien Leitung,
   c4) wobei anhand des Überschreitens eines oder mehrerer Schwellwerte ein Leck an der Leitung mittels der Recheneinheit feststellbar und/oder analysierbar ist oder festgestellt und/oder analysiert wird.

Der Sensor ist oder umfasst vorzugsweise einen Geräuschsensor und/oder einen Piezosensor und/oder ein Piezomikrofon, insbesondere zum Messen eines Geräuschs mittels der Vibration und/oder des Körperschalls an der Leitungswand, und/oder ein Hydrophon zum Messen des Geräuschs direkt an der Wassersäule.

Die in der Recheneinheit hinterlegten Schwellwerte können durch einen Benutzer einstellbar und/oder anpassbar sein oder eingestellt und/oder angepasst werden. Ferner können die Schwellwerte auch durch Algorithmen und/oder künstliche Intelligenz automatisiert eingestellt und/oder angepasst werden.

Die Vorteile der Erfindung liegen insbesondere darin, dass mit dem erfindungsgemäßen Verfahren eine bessere Differenzierung zwischen Leckgeräuschen und Störgeräuschen möglich ist. Mit dem erfindungsgemäßen Verfahren werden zusätzlich zum reinen Signalpegel die Frequenzanteile des Signals ausgewertet. Die hohen Frequenzanteile werden durch die Dämpfung über das Rohr abgeschwächt. Je dichter der Sensor am Leck positioniert ist, desto mehr hohe Frequenzanteile sind enthalten. Niedrige Frequenzanteile sind noch über eine lange Strecke wahrnehmbar. Typische Leckgeräusche zeichnen sich häufig breitbandig in einem Frequenzbereich von 150-600 Hz ab. Störgeräusche durch das Stromnetz findet man üblicherweise als schmalbandige Frequenzen bei 50/60 Hz und 100/120Hz. Bei bekannten Leckortungsverfahren wird eine Auswertung, ob ein Leck vorhanden ist oder nicht, hauptsächlich über den Geräuschpegel und durch Auswertung eines einzelnen signifikanten Frequenzwertes des aufgenommenen Geräuschs durchgeführt. Dies wird jedoch problematisch, sobald ein Störgeräusch einen höheren Geräuschpegel erzeugt als das Leckgeräusch selbst. Mittels der Erfindung können über die Auswertung des Frequenzwerts Rückschlüsse gezogen werden, ob das Geräusch hauptsächlich von einem Leck oder von einem Netzstörer verursacht wurde. Durch die Einstellung der Schwellwerte für jedes Frequenzband können Frequenzen, in denen häufig Störungen auftreten, ignoriert werden.

Das Spektrum des Leckgeräuschs, wird über eine FFT (Fast Fourier Transformation / Frequenzanalyse) berechnet und setzt sich aus relativ vielen Werten zusammen (z.B. 4096). Da dies eine große Datenmenge für einen Sensor ist, ist es sinnvoll die Daten zu reduzieren, insbesondere auf 4 bis 128 Frequenzbänder, beispielsweise auf 16 Frequenzbänder. Somit können Übertragungszeit und damit Strom- und Datenvolumen reduziert werden. Der Bereich kann allerdings auch größer gewählt werden. Es könnten auch z.B. 2 bis 4096 Frequenzbänder sein. Die Reduzierung wird hauptsächlich zur Verringerung der Datenmenge vorgenommen.

Gemäß einer bevorzugten Ausführungsvariante der Erfindung wird eine vorgesehene Anzahl an Frequenzbändern mittels der Recheneinheit festgelegt und/oder ist in der Recheneinheit hinterlegt, wobei zwischen 4 und 128 Frequenzbänder vorgesehen werden, besonders bevorzugt 16 Frequenzbänder. Es kann vorgesehen sein, dass der festgelegte und/oder hinterlegte Schwellwert jedes Frequenzbands zwischen 1% und 100% größer ist als der maximale Geräuschpegel in diesem Frequenzband bei einer Messung an der leckfreien Leitung.

Ferner kann vorgesehen sein, dass der Abstand des Schwellwerts jedes Frequenzbands zum maximalen Geräuschpegel in diesem Frequenzband bei einer Messung an der leckfreien Leitung für jedes Frequenzband individuell mittels der Recheneinheit festgelegt wird und/oder in der Recheneinheit hinterlegt ist.

Gemäß einer Weiterbildung der Erfindung wird der Abstand in einem Frequenzband in Frequenzbereichen bekannter und/oder in der Recheneinheit gespeicherter Störgeräusche größer eingestellt, als der Abstand in einem Frequenzband in Frequenzbereichen ohne bekannte und/oder in der Recheneinheit gespeicherter Störgeräusche.

Gemäß der Erfindung ist vorgesehen, dass der Schwellwert der Frequenzbänder in Frequenzbereichen, in denen typischerweise Geräuschpegelerhöhungen durch Leckgeräusche auftreten, also der Schwellwert der Frequenzbänder im Frequenzbereich 150Hz bis 600Hz weniger hoch über dem maximalen Geräuschpegel in diesen Frequenzbändern bei einer Messung an der leckfreien Leitung mittels der Recheneinheit festgelegt wird und/oder in der Recheneinheit hinterlegt ist, als der Schwellwert der Frequenzbänder im Frequenzbereich unterhalb 100Hz und/oder oberhalb 800Hz.

Die Breite der Frequenzbänder kann individuell mittels der Recheneinheit festgelegt werden und/oder in der Recheneinheit hinterlegt sein.

Gemäß der Erfindung ist die Breite der im Frequenzbereich typischer Leckgeräusche, also im Frequenzbereich 150Hz bis 600Hz festgelegten oder vorgesehenen Frequenzbänder weniger groß ist, als die Breite der im Nutzbereich, insbesondere im Frequenzbereich unterhalb 100Hz und/oder oberhalb 800Hz festgelegten oder vorgesehenen Frequenzbänder.

Ferner ist gemäß der Erfindung vorgesehen, dass die Breite der Frequenzbänder in Frequenzbereichen bekannter und/oder in der Recheneinheit hinterlegter Störgeräusche, insbesondere im Frequenzbereich unterhalb 100Hz und/oder oberhalb 800Hz, weniger groß gewählt ist oder eingestellt wird, als die Breite der Frequenzbänder im Frequenzbereich unterhalb 100Hz und/oder oberhalb 800Hz im Mittel groß sind.

Gemäß einer Ausführungsvariante der Erfindung wird bei jedem Überschreiten eines Schwellwerts ein Warnsignal durch die Recheneinheit erzeugt, wobei das Warnsignal insbesondere von der Recheneinheit und/oder einer zentralen Recheneinheit verarbeitet wird, um ein Leck festzustellen oder zu analysieren. Optional erhält jedes Warnsignal durch die Recheneinheit eine Gewichtung, wobei die Gewichtung abhängig von dem Frequenzband ist, in dem der Schwellwert überschritten wird. Ferner kann auch die prozentuale Überschreitung des Schwellwerts und/oder ein mehrmaliges Überschreiten des Schwellwerts in die Gewichtung mit einbezogen oder einberechnet werden.

Bevorzugt ist die Gewichtung eines Überschreitens des Schwellwerts für die Frequenzbänder im Frequenzbereich 150Hz bis 600Hz höher, als die Gewichtung eines Überschreitens des Schwellwerts für die Frequenzbänder im Frequenzbereich unterhalb 100Hz und/oder oberhalb 800Hz.

Es kann vorgesehen sein, dass die Recheneinheit eine Alarmmeldung ausgibt oder an eine zentrale Recheneinheit übermittelt, sofern ein oder mehrere Warnsignale erzeugt werden.

Auch kann vorgesehen sein, dass die Recheneinheit eine Alarmmeldung ausgibt oder an eine zentrale Recheneinheit übermittelt, sofern nach Gewichtung der erzeugten Warnsignale ein vorgesehener Gesamtgewichtungswert erreicht oder überschritten wird. Der Gesamtgewichtungswert kann ein Maß für die Leckwahrscheinlichkeit sein. Je mehr Schwellwerte überschritten sind und/oder je höher die Gewichtung der entsprechenden Frequenzbänder ist, desto größer ist die Wahrscheinlichkeit, dass ein Leck vorhanden ist.

Eine Ausführungsvariante der Erfindung sieht vor, dass mehrere Geräusch- und/oder Frequenzlogger, insbesondere in vorgesehenen Abständen, an der Leitung für fluide Medien, insbesondere der Wasserleitung oder an Armaturen der Leitung angeordnet werden, wobei jeder Geräusch- und/oder Frequenzlogger die folgenden Schritte durchführt:
a Messen eines Geräuschs an der Leitung durch den Sensor und Ermitteln eines Geräuschpegels mittels der Recheneinheit,
   c1) wobei mittels der Recheneinheit eine Frequenzanalyse, insbesondere eine Fourier-Analyse, des Geräuschpegels zur Ermittlung eines Frequenzspektrums durchgeführt wird,
   c2) wobei das ermittelte Frequenzspektrum mittels der Recheneinheit in zwei oder mehrere Frequenzbänder unterteilt wird,
   c3) wobei mittels der Recheneinheit, insbesondere individuell, für jedes Frequenzband ein Schwellwert festlegt wird und/oder in der Recheneinheit hinterlegt ist, der größer ist als der maximale Geräuschpegel in diesem Frequenzband bei einer Messung an der leckfreien Leitung,
   c4) wobei anhand des Überschreitens eines oder mehrerer Schwellwerte ein Leck an der Leitung mittels der Recheneinheit feststellbar und/oder analysierbar ist oder festgestellt und/oder analysiert wird.

Gemäß einer Weiterbildung übermitteln die Recheneinheiten der Geräusch- und/oder Frequenzlogger, insbesondere im Falle eines Lecks, Alarmmeldungen an eine zentrale Recheneinheit, beispielsweise mittels einer Cloud, wobei jede Alarmmeldung den Geräuschpegel und die Frequenz des Geräuschpegels beim Überschreiten des Schwellwerts umfasst.

Es kann vorgesehen sein, dass die Alarmmeldungen, insbesondere Alarmmeldungen mehrerer Recheneinheiten, von der zentralen Recheneinheit miteinander verrechnet werden, um ein Leck festzustellen und/oder, insbesondere hinsichtlich der Größe und/oder Position des Lecks, zu analysieren.

Ferner kann vorgesehen sein, dass die Position jedes der Geräusch- und/oder Frequenzlogger und der Leitungsverlauf der Leitung, insbesondere der Wasserleitung, in der zentralen Recheneinheit hinterlegt ist, und die zentrale Recheneinheit anhand der Position der Geräusch- und/oder Frequenzlogger und des Leitungsverlaufs sowie der Alarmmeldungen die Größe und/oder Position des Lecks ermittelt.

Die Geräusch- und/oder Frequenzlogger können beispielsweise im Abstand von 50-200 m entlang der Leitung positioniert werden. Je näher der Sensor an der Leckage ist, desto besser kann das Leckgeräusch detektiert werden und äußert sich in einem hohen Signalpegel (Lautheit des Geräuschs). Der Signalpegel ist ebenfalls höher, je größer das Leck ist. Insbesondere sind auch mehr hohe Frequenzanteile im Signal enthalten.

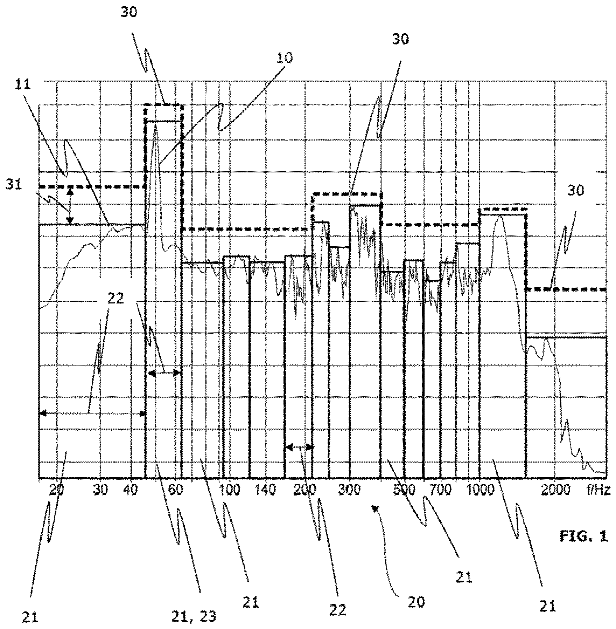

Die Erfindung wird nachstehend auch hinsichtlich weiterer Merkmale und Vorteile anhand der Beschreibung eines Ausführungsbeispiels und unter Bezugnahme auf die beiliegende schematische Zeichnung näher erläutert. FIG. 1 zeigt beispielhaft ein Frequenzspektrum eines Geräuschpegels, welches gemäß dem erfindungsgemäßen Verfahren in mehrere Frequenzbänder unterteilt ist und wobei für jedes Frequenzband ein Schwellwert festgelegt ist.

Das erfindungsgemäße Verfahren ist zur Feststellung und/oder Analyse eines Lecks an einer Leitung für fluide Medien vorgesehen. Exemplarisch wird nachfolgend auf Wasserleitungen, insbesondere Trinkwasserleitungen Bezug genommen. Gemäß dem erfindungsgemäßen Verfahren wird zunächst in einem Schritt a) wenigstens ein Geräusch- und/oder Frequenzlogger bereitgestellt, der einen Sensor zum Messen eines Geräuschs, und eine Recheneinheit umfasst.

Gemäß einem Schritt b) wird der Geräusch- und/oder Frequenzlogger an einer Wasserleitung, insbesondere einer Trinkwasserleitung, oder an einer Armatur der Wasserleitung, beispielsweise einer Schieberstange, die mit der Wasserleitung mechanisch verbunden ist, angebracht.

In einem Schritt c) wird das Geräusch an der Wasserleitung durch den Sensor gemessen und ein Geräuschpegel 10 mittels der Recheneinheit ermittelt.

Mittels der Recheneinheit wird dann in einem Schritt c1) eine Frequenzanalyse, insbesondere eine Fourier-Analyse, beispielsweise eine Fast -Fourier-Transformation, des Geräuschpegels 10 zur Ermittlung eines Frequenzspektrums 20 durchgeführt. Dieses Frequenzspektrum 20 ist in FIG. 1 dargestellt.

In einem Schritt c2) wird das ermittelte Frequenzspektrum 20 mittels der Recheneinheit in 16 Frequenzbänder 21 unterteilt. Die Unterteilung in 16 Frequenzbänder ist voreingestellt. Die Breite 22 dieser Frequenzbänder 21 wird mittels der Recheneinheit individuell für jedes Frequenzband 21 festgelegt. Die vorgesehene Breite 22 der Frequenzbänder 21 kann dazu in der Recheneinheit hinterlegt sein. Dabei wird die Breite 22 der im Frequenzbereich 150Hz bis 600Hz festgelegten oder vorgesehenen Frequenzbänder 21 weniger groß festgelegt, als die Breite 22 der im Frequenzbereich unterhalb 100Hz und/oder oberhalb 800Hz festgelegten oder vorgesehenen Frequenzbänder 21. Dies beruht auf dem Umstand, dass Leckgeräusche typischerweise im Frequenzbereich 150Hz bis 600Hz auftreten und dort besonders effizient detektiert werden sollen. Zudem wird die Breite 22 der Frequenzbänder 23 in Frequenzbereichen bekannter und in der Recheneinheit hinterlegter Störgeräusche, im Frequenzbereich unterhalb 100Hz und/oder oberhalb 800Hz, weniger groß eingestellt, als die Breite 22 der Frequenzbänder im Frequenzbereich unterhalb 100Hz und/oder oberhalb 800Hz im Mittel groß ist.

Gemäß einem Schritt c3) wird mittels der Recheneinheit individuell für jedes der 16 Frequenzbänder ein Schwellwert 30 festlegt. Dieser kann beispielsweise in der Recheneinheit hinterlegt sein. Der Schwellwert 30 jedes Frequenzbands 21 ist größer als der maximale Geräuschpegel 11 in diesem Frequenzband 21 bei einer Messung an der leckfreien Wasserleitung. Der Schwellwert 30 der Frequenzbänder 21 im Frequenzbereich 150Hz bis 600Hz wird zudem mittels der Recheneinheit weniger hoch über dem maximalen Geräuschpegel 11 in diesen Frequenzbändern 21 bei einer Messung an der leckfreien Wasserleitung festgelegt als der Schwellwert 30 der Frequenzbänder 21 im Frequenzbereich unterhalb 100Hz und/oder oberhalb 800Hz. Dies beruht auf dem Umstand, dass Leckgeräusche typischerweise im Frequenzbereich 150Hz bis 600Hz auftreten und dort besonders effizient detektiert werden sollen.

Mit der individuellen Festlegung des Schwellwerts 30 wird auch der Abstand 31 des Schwellwerts 30 jedes Frequenzbands 21 zum maximalen Geräuschpegel 11 in diesem Frequenzband 21 für jedes Frequenzband 21 individuell mittels der Recheneinheit festgelegt, wobei der Abstand 31 in einem Frequenzband 23 in Frequenzbereichen bekannter und in der Recheneinheit gespeicherter Störgeräusche größer ein gestellt wird, als der Abstand in einem Frequenzband 21 in Frequenzbereichen ohne bekannte Störgeräusche. Auf diese Weise lässt sich die "Feinheit" des Schwellwerts 30 anpassen, wobei der Schwellwert in Frequenzbändern 21, in denen bekannte Störgeräusche möglich oder vorhanden sind, weniger fein eingestellt wird, um ein durch Störgeräusche verursachtes Warnsignal zumindest überwiegend zu vermeiden.

In einem Schritt c4) wird anhand des Überschreitens eines oder mehrerer Schwellwerte 30 ein Leck an der Wasserleitung mittels der Recheneinheit festgestellt und/oder analysiert. Bei jedem Überschreiten eines Schwellwerts 30 wird ein Warnsignal durch die Recheneinheit erzeugt, wobei das Warnsignal von der Recheneinheit oder einer zentralen Recheneinheit insbesondere verarbeitet wird, um ein Leck festzustellen oder zu analysieren.

Es kann vorgesehen sein, dass jedes Warnsignal durch die Recheneinheit eine Gewichtung erhält, wobei die Gewichtung abhängig von dem Frequenzband 21 ist, in dem der Schwellwert 30 überschritten wird. Ferner kann auch die prozentuale Überschreitung des Schwellwerts 30 und/oder ein mehrmaliges Überschreiten des Schwellwerts 30 in die Gewichtung mit einbezogen oder einberechnet werden. Die Gewichtung eines Überschreitens des Schwellwerts 30 für die Frequenzbänder 21 im Frequenzbereich 150Hz bis 600Hz ist höher als die Gewichtung eines Überschreitens des Schwellwerts 30 für die Frequenzbänder 21 im Frequenzbereich unterhalb 100Hz und/oder oberhalb 800Hz. Dies beruht auf dem Umstand, dass Leckgeräusche typischerweise im Frequenzbereich 150Hz bis 600Hz auftreten und dort besonders effizient detektiert werden sollen.

Die Recheneinheit gibt eine Alarmmeldung aus oder übermittelt eine Alarmmeldung an eine zentrale Recheneinheit, sofern entweder ein oder mehrere Warnsignale erzeugt werden oder nach Gewichtung der erzeugten Warnsignale ein vorgesehener Gesamtgewichtungswert erreicht oder überschritten wird.

Eine Weiterbildung des Verfahrens sieht vor, dass mehrere Geräusch- und/oder Frequenzlogger in vorgesehenen Abständen, beispielsweise 50m - 200m, an der Wasserleitung oder an Armaturen der Wasserleitung angeordnet werden, wobei jeder Geräusch- und/oder Frequenzlogger die Schritte c) bis c4) durchführt.

Die Recheneinheiten der Geräusch- und/oder Frequenzlogger übermitteln anhand der vorstehend beschriebenen Kriterien und/oder im Falle eines Lecks eine Alarmmeldung an eine zentrale Recheneinheit, wobei jede Alarmmeldung den Geräuschpegel 10 und die Frequenz des Geräuschpegels 10 beim Überschreiten des Schwellwerts 30 umfasst. Die Alarmmeldungen werden von der zentralen Recheneinheit miteinander verrechnet, um ein Leck festzustellen und hinsichtlich der Größe und Position des Lecks zu analysieren. Die Position jedes der Geräusch- und/oder Frequenzlogger und der Leitungsverlauf der Wasserleitung sind der zentralen Recheneinheit hinterlegt, und die zentrale Recheneinheit ermittelt anhand der Position der Geräusch- und/oder Frequenzlogger und des Leitungsverlaufs sowie der Alarmmeldungen die Größe und Position des Lecks.

### Bezugszeichenliste

10 Geräuschpegel
11 maximaler Geräuschpegel
20 Frequenzspektrum
21 Frequenzband
22 Breite
23 Frequenzband in Frequenzbereich bekannter Störgröße
30 Schwellwert
31 Abstand

## Patentansprüche

1. Verfahren zur Feststellung und/oder Analyse eines Lecks an einer Leitung für fluide Medien, insbesondere einer Wasserleitung, wobei das Verfahren die folgenden Schritte umfasst:
a) Bereitstellen wenigstens eines Geräusch- und/oder Frequenzloggers, umfassend einen Sensor, und eine Recheneinheit,
b) Anbringen des Geräusch- und/oder Frequenzloggers an der Leitung oder an Armaturen der Leitung,
c) Messen eines Geräuschs an der Leitung durch den Sensor und Ermitteln eines Geräuschpegels (10) mittels der Recheneinheit,
c1) wobei mittels der Recheneinheit eine Frequenzanalyse des Geräuschpegels (10) zur Ermittlung eines Frequenzspektrums (20) durchgeführt wird,
c2) wobei das ermittelte Frequenzspektrum (20) mittels der Recheneinheit in zwei oder mehrere Frequenzbänder (21) unterteilt wird,
c3) wobei mittels der Recheneinheit für jedes Frequenzband ein Schwellwert (30) festlegt wird und/oder in der Recheneinheit hinterlegt ist, der größer ist als der maximale Geräuschpegel (11) in diesem Frequenzband (21) bei einer Messung an der leckfreien Leitung,
c4) wobei anhand des Überschreitens eines oder mehrerer Schwellwerte (30) ein Leck an der Leitung mittels der Recheneinheit feststellbar und/oder analysierbar ist oder festgestellt und/oder analysiert wird,
**dadurch gekennzeichnet,**
**dass** der Schwellwert (30) der Frequenzbänder (21) im Frequenzbereich 150Hz bis 600Hz weniger hoch über dem maximalen Geräuschpegel (11) in diesen Frequenzbändern (21) bei einer Messung an der leckfreien Leitung mittels der Recheneinheit festgelegt wird und/oder in der Recheneinheit hinterlegt ist, als der Schwellwert (30) der Frequenzbänder (21) im Frequenzbereich unterhalb 100Hz und/oder oberhalb 800Hz, und
**dass** die Breite (22) der im Frequenzbereich 150Hz bis 600Hz festgelegten oder vorgesehenen Frequenzbänder (21) weniger groß ist, als die Breite (22) der im Frequenzbereich unterhalb 100Hz und/oder oberhalb 800Hz festgelegten oder vorgesehenen Frequenzbänder (21).

2. Verfahren nach Anspruch 1,
**dadurch gekennzeichnet, dass**
eine vorgesehene Anzahl an Frequenzbändern (21) mittels der Recheneinheit festgelegt wird und/oder in der Recheneinheit hinterlegt ist, wobei zwischen 4 und 128 Frequenzbänder (21) vorgesehen werden, bevorzugt 16 Frequenzbänder (21).

3. Verfahren nach Anspruch 1 oder 2,
**dadurch gekennzeichnet, dass**
der festgelegte und/oder hinterlegte Schwellwert (30) jedes Frequenzbands (21) zwischen 1% und 100% größer ist als der maximale Geräuschpegel (11) in diesem Frequenzband (21) bei einer Messung an der leckfreien Leitung.

4. Verfahren nach einem der vorhergehenden Ansprüche,
**dadurch gekennzeichnet, dass**
der Abstand (31) des Schwellwerts (30) jedes Frequenzbands (21) zum maximalen Geräuschpegel (11) in diesem Frequenzband (21) bei einer Messung an der leckfreien Leitung für jedes Frequenzband (21) individuell mittels der Recheneinheit festgelegt wird und/oder in der Recheneinheit hinterlegt ist.

5. Verfahren nach einem der vorhergehenden Ansprüche,
**dadurch gekennzeichnet, dass**
der Abstand (31) in einem Frequenzband (23) in Frequenzbereichen bekannter und/oder in der Recheneinheit gespeicherter Störgeräusche größer eingestellt wird, als der Abstand in einem Frequenzband (21) in Frequenzbereichen ohne bekannte und/oder in der Recheneinheit gespeicherter Störgeräusche.

6. Verfahren nach einem der vorhergehenden Ansprüche,
**dadurch gekennzeichnet, dass**
die Breite (22) der Frequenzbänder (21) individuell mittels der Recheneinheit festgelegt wird und/oder in der Recheneinheit hinterlegt ist.

7. Verfahren nach einem der vorhergehenden Ansprüche,
**dadurch gekennzeichnet, dass**
die Breite (22) der Frequenzbänder (23) in Frequenzbereichen bekannter und/oder in der Recheneinheit hinterlegter Störgeräusche weniger groß gewählt ist oder eingestellt wird, als die Breite (22) der Frequenzbänder im Frequenzbereich unterhalb 100Hz und/oder oberhalb 800Hz im Mittel groß sind.

8. Verfahren nach einem der vorhergehenden Ansprüche,
**dadurch gekennzeichnet, dass**
bei jedem Überschreiten eines Schwellwerts (30) ein Warnsignal durch die Recheneinheit erzeugt wird.

9. Verfahren nach Anspruch 8,
**dadurch gekennzeichnet, dass**
jedes Warnsignal durch die Recheneinheit eine Gewichtung erhält, wobei die Gewichtung abhängig von dem Frequenzband (21) ist, in dem der Schwellwert (30) überschritten wird.

10. Verfahren nach Anspruch 9,
**dadurch gekennzeichnet, dass**
die Gewichtung eines Überschreitens des Schwellwerts (30) für die Frequenzbänder (21) im Frequenzbereich 150Hz bis 600Hz höher ist, als die Gewichtung eines Überschreitens des Schwellwerts (30) für die Frequenzbänder (21) im Frequenzbereich unterhalb 100Hz und/oder oberhalb 800Hz.

11. Verfahren nach einem der Ansprüche 8 bis 10,
**dadurch gekennzeichnet, dass**
die Recheneinheit eine Alarmmeldung ausgibt oder an eine zentrale Recheneinheit übermittelt, sofern ein oder mehrere Warnsignale erzeugt werden.

12. Verfahren nach einem der Ansprüche 8 bis 11,
**dadurch gekennzeichnet, dass**
die Recheneinheit eine Alarmmeldung ausgibt oder an eine zentrale Recheneinheit übermittelt, sofern nach Gewichtung der erzeugten Warnsignale ein vorgesehener Gesamtgewichtungswert erreicht oder überschritten wird.

13. Verfahren nach einem der vorhergehenden Ansprüche,
**dadurch gekennzeichnet, dass**
mehrere Geräusch- und/oder Frequenzlogger an der Leitung oder an Armaturen der Leitung angeordnet werden, wobei jeder Geräusch- und/oder Frequenzlogger die Schritte c) bis c4) durchführt.

14. Verfahren nach Anspruch 13,
**dadurch gekennzeichnet, dass**
die Recheneinheiten der Geräusch- und/oder Frequenzlogger Alarmmeldungen an eine zentrale Recheneinheit übermitteln, wobei jede Alarmmeldung den Geräuschpegel (10) und die Frequenz des Geräuschpegels (10) beim Überschreiten des Schwellwerts (30) umfasst.

15. Verfahren nach Anspruch 14,
**dadurch gekennzeichnet, dass**
die Alarmmeldungen von der zentralen Recheneinheit miteinander verrechnet werden, um ein Leck festzustellen und/oder zu analysieren.

16. Verfahren nach den Ansprüchen 13 bis 15,
**dadurch gekennzeichnet, dass**
die Position jedes der Geräusch- und/oder Frequenzlogger und der Leitungsverlauf der Leitung in der zentralen Recheneinheit hinterlegt ist, und die zentrale Recheneinheit anhand der Position der Geräusch- und/oder Frequenzlogger und des Leitungsverlaufs sowie der Alarmmeldungen die Größe und/oder Position des Lecks ermittelt.

## Claims

1. Method for determining and/or analyzing a leak in a line for fluid media, in particular a water line, the method comprising the following steps:
a) providing at least one noise and/or frequency logger comprising a sensor and a computing unit,
b) attaching the noise and/or frequency logger to the line or to fittings of the line,
c) measuring noise on the line via the sensor and determining a noise level (10) by means of the computing unit,
c1) wherein a frequency analysis of the noise level (10) is performed by the computing unit to determine a frequency spectrum (20),
c2) wherein the determined frequency spectrum (20) is divided into two or more frequency bands (21) by means of the computing unit,
c3) wherein a threshold value (30) is determined for each frequency band by means of the computing unit and/or is stored in the computing unit, which threshold value is greater than the maximum noise level (11) in this frequency band (21) during a measurement of the leak-free line,
c4) wherein, based on one or more threshold values (30) being exceeded, a leak in the line can be determined and/or analyzed or is detected and/or analyzed by means of the computing unit,
**characterized in that**
**that** the threshold value (30) of the frequency bands (21) in the frequency range of 150Hz to 600Hz is set by means of the computing unit and/or is stored in the computing unit to be not as high above the maximum noise level (11) in these frequency bands (21) during a measurement of the leak-free line than the threshold value (30) of the frequency bands (21) in the frequency range below 100Hz and/or above 800Hz, and
**that** the width (22) of the frequency bands (21) set or provided in the frequency range of 150 Hz to 600 Hz is less than the width (22) of the frequency bands (21) set or provided in the frequency range below 100 Hz and/or above 800 Hz.

2. Method according to claim 1,
**characterized in that**
a provided number of frequency bands (21) is set by means of the computing unit and/or is stored in the computing unit, wherein between 4 and 128 frequency bands (21), preferably 16 frequency bands (21), are provided.

3. Method according to claim 1 or 2,
**characterized in that**
the set and/or stored threshold value (30) of each frequency band (21) is between 1% and 100% greater than the maximum noise level (11) in this frequency band (21) during a measurement of the leak-free line.

4. Method according to one of the preceding claims,
**characterized in that**
the distance (31) of the threshold value (30) of each frequency band (21) at the maximum noise level (11) in this frequency band (21) during a measurement of the leak-free line is set individually for each frequency band (21) by means of the computing unit and/or is stored in the computing unit.

5. Method according to one of the preceding claims,
**characterized in that**
the distance (31) in a frequency band (23) in frequency ranges of interference noises that are known and/or stored in the computing unit is set greater than the distance in a frequency band (21) in frequency ranges without interference noises that are known and/or stored in the computing unit.

6. Method according to one of the preceding claims,
**characterized in that**
the width (22) of the frequency bands (21) is set individually by means of the computing unit and/or is stored in the computing unit.

7. Method according to one of the preceding claims,
**characterized in that**
the width (22) of the frequency bands (23) in frequency ranges of interference noises that are known and/or stored in the computing unit is selected or set to be less on the average than the width (22) of the frequency bands in the frequency range below 100 Hz and/or above 800 Hz.

8. Method according to one of the preceding claims,
**characterized in that**
a warning signal is generated by the computing unit each time a threshold value (30) is exceeded.

9. Method according to claim 8,
**characterized in that**
each warning signal is given a weighting by the computing unit, wherein the weighting depends on the frequency band (21) in which the threshold value (30) is exceeded.

10. Method according to claim 9,
**characterized in that**
the weighting of exceeding the threshold value (30) for the frequency bands (21) in the frequency range 150 Hz to 600 Hz is higher than the weighting of exceeding the threshold value (30) for the frequency bands (21) in the frequency range below 100 Hz and/or above 800 Hz.

11. Method according to one of claims 8 to 10,
**characterized in that**
the computing unit outputs an alarm message or transmits it to a central computing unit if one or more warning signals are generated.

12. Method according to one of claims 8 to 11,
**characterized in that**
the computing unit outputs an alarm message or transmits it to a central computing unit if, after weighting the generated warning signals, a provided total weighting value is reached or exceeded.

13. Method according to one of the preceding claims,
**characterized in that**
a plurality of noise and/or frequency loggers are arranged on the line or on fittings of the line, each noise and/or frequency logger performing steps c) to c4).

14. Method according to claim 13,
**characterized in that**
the computing units of the noise and/or frequency loggers transmit alarm messages to a central computing unit, each alarm message comprising the noise level (10) and the frequency of the noise level (10) when the threshold value (30) is exceeded.

15. Method according to claim 14,
**characterized in that**
the alarm messages are calculated together by the central computing unit in order to determine and/or analyze a leak.

16. Method according to claims 13 to 15,
**characterized in that**
the position of each of the noise and/or frequency loggers and the line characteristic is stored in the central computing unit, and the central computing unit determines the size and/or position of the leak based on the position of the noise and/or frequency loggers and the line characteristic as well as the alarm messages.

## Revendications

1. Procédé de detection et/ou d'analyse d'une fuite dans une conduite de milieu liquide, en particulier une conduite d'eau, le procédé comprenant les étapes suivantes:
a) la mise à disposition d'au moins un enregistreur de bruit et/ou de fréquence comprenant un capteur et une unité de calcul,
b) fixation de l'enregistreur de bruit et/ou de fréquence sur la conduite ou sur des raccords de la conduite,
c) mesure d'un bruit sur la conduite par le capteur et détermination d'un niveau sonore (10) à l'aide de l'unité de calcul,
c1) une analyse de fréquence du niveau sonore (10) étant effectuée à l'aide de l'unité de calcul afin de déterminer un spectre de fréquences (20),
c2) le spectre de fréquences déterminé (20) étant divisé en deux ou plusieurs bandes de fréquences (21) à l'aide de l'unité de calcul,
c3) une valeur seuil (30) étant définie et/ou enregistrée dans l'unité de calcul pour chaque bande de fréquence, laquelle valeur seuil est supérieure au niveau sonore maximal (11) dans cette bande de fréquence (21) lors d'une mesure sur la conduite sans fuite,
c4) une fuite sur la conduite pouvant être détectée et/ou analysée à l'aide de l'unité de calcul ou étant détectée et/ou analysée en cas de dépassement d'une ou de plusieurs valeurs seuils (30),
**caractérisé en ce**
**que** la valeur seuil (30) des bandes de fréquences (21) dans la plage de fréquences de 150 Hz à 600 Hz est fixée à un niveau moins élevé au-dessus du niveau sonore maximal (11) dans ces bandes de fréquences (21) lors d'une mesure sur la conduite sans fuite au moyen de l'unité de calcul et/ou enregistrée dans l'unité de calcul, que la valeur seuil (30) des bandes de fréquences (21) dans la plage de fréquences inférieure à 100 Hz et/ou supérieure à 800 Hz, et
**que** la largeur (22) des bandes de fréquences (21) déterminées ou prévues dans la plage de fréquences comprise entre 150 Hz et 600 Hz est inférieure à la largeur (22) des bandes de fréquences (21) déterminées ou prévues dans la plage de fréquences inférieure à 100 Hz et/ou supérieure à 800 Hz.

2. Procédé selon la revendication 1,
**caractérisé en ce qu'**
un nombre prévu de bandes de fréquences (21) est défini au moyen de l'unité de calcul et/ou est enregistré dans l'unité de calcul, entre 4 et 128 bandes de fréquences (21) étant prévues, de préférence 16 bandes de fréquences (21).

3. Procédé selon la revendication 1 ou 2,
**caractérisé en ce que**
la valeur seuil (30) définie et/ou enregistrée de chaque bande de fréquence (21) est supérieure de 1 % à 100 % au niveau sonore maximal (11) dans cette bande de fréquence (21) lors d'une mesure sur la conduite sans fuite.

4. Procédé selon l'une des revendications précédentes,
**caractérisé en ce que**
la distance (31) entre la valeur seuil (30) de chaque bande de fréquence (21) et le niveau sonore maximal (11) dans cette bande de fréquence (21) lors d'une mesure sur la conduite sans fuite est défini individuellement pour chaque bande de fréquence (21) à l'aide de l'unité de calcul et/ou est enregistré dans l'unité de calcul.

5. Procédé selon l'une des revendications précédentes,
**caractérisé en ce que**
la distance (31) dans une bande de fréquences (23) dans des plages de fréquences de bruits parasites connus et/ou enregistrés dans l'unité de calcul est réglée plus grande que la distance dans une bande de fréquences (21) dans des plages de fréquences sans bruits parasites connus et/ou enregistrés dans l'unité de calcul.

6. Procédé selon l'une des revendications précédentes,
**caractérisé en ce que**
la largeur (22) des bandes de fréquences (21) est déterminée individuellement au moyen de l'unité de calcul et/ou est enregistrée dans l'unité de calcul.

7. Procédé selon l'une des revendications précédentes,
**caractérisé en ce que**
la largeur (22) des bandes de fréquences (23) dans les plages de fréquences des bruits parasites connus et/ou enregistrés dans l'unité de calcul est choisie ou réglée de manière à être inférieure à la largeur (22) moyenne des bandes de fréquences dans la plage de fréquences inférieure à 100 Hz et/ou supérieure à 800 Hz.

8. Procédé selon l'une des revendications précédentes,
**caractérisé en ce que**
à chaque dépassement d'une valeur seuil (30), un signal d'avertissement est généré par l'unité de calcul.

9. Procédé selon la revendication 8,
**caractérisé en ce que**
chaque signal d'avertissement reçoit une pondération par l'unité de calcul, la pondération dépendant de la bande de fréquences (21) dans laquelle la valeur seuil (30) est dépassée.

10. Procédé selon la revendication 9,
**caractérisé en ce que**
la pondération d'un dépassement de la valeur seuil (30) pour les bandes de fréquences (21) dans la plage de fréquences de 150 Hz à 600 Hz est supérieure à la pondération d'un dépassement de la valeur seuil (30) pour les bandes de fréquences (21) dans la plage de fréquences inférieure à 100 Hz et/ou supérieure à 800 Hz.

11. Procédé selon l'une des revendications 8 à 10,
**caractérisé en ce que**
l'unité de calcul émet un message d'alarme ou le transmet à une unité de calcul centrale dès qu'un ou plusieurs signaux d'avertissement sont générés.

12. Procédé selon l'une des revendications 8 à 11,
**caractérisé en ce que**
l'unité de calcul émet un message d'alarme ou le transmet à une unité de calcul centrale dès lors qu'une valeur de pondération totale prévue est atteinte ou dépassée après pondération des signaux d'avertissement générés.

13. Procédé selon l'une des revendications précédentes,
**caractérisé en ce que**
plusieurs enregistreurs de bruit et/ou de fréquence sont disposés sur la conduite ou sur les raccords de la conduite, chaque enregistreur de bruit et/ou de fréquence effectuant les étapes c) à c4).

14. Procédé selon la revendication 13,
**caractérisé en ce que**
les unités de calcul des enregistreurs de bruit et/ou de fréquence transmettent des messages d'alarme à une unité de calcul centrale, chaque message d'alarme comprenant le niveau sonore (10) et la fréquence du niveau sonore (10) lorsque la valeur seuil (30) est dépassée.

15. Procédé selon la revendication 14,
**caractérisé en ce que**
les messages d'alarme sont comparés entre eux par l'unité centrale de calcul afin de détecter et/ou d'analyser une fuite.

16. Procédé selon les revendications 13 à 15,
**caractérisé en ce que**
la position de chacun des enregistreurs de bruit et/ou de fréquence et le tracé de la conduite sont enregistrés dans l'unité centrale de calcul, et l'unité centrale de calcul détermine la taille et/ou la position de la fuite à l'aide de la position des enregistreurs de bruit et/ou de fréquence et du tracé de la conduite ainsi que des messages d'alarme.
